Europäisches Patentamt

European Patent Office

Office européen des brevets

(11) Veröffentlichungsnummer: **0 004 552**
**A1**

## EUROPÄISCHE PATENTANMELDUNG

(21) Anmeldenummer: 79100603.4

(22) Anmeldetag: 01.03.79

(51) Int. Cl.²: **F 24 J 3/00**
**F 25 D 21/12**

(30) Priorität: 10.04.78 CH 3802/78

(43) Veröffentlichungstag der Anmeldung:
17.10.79 Patentblatt 79/21

(84) Benannte Vertragsstaaten:
BE CH DE FR GB LU NL SE

(71) Anmelder: **Gebrüder Sulzer Aktiengesellschaft**

**CH-8401 Winterthur(CH)**

(72) Erfinder: **Ehrsam, Christian, Dr.**
**Wallrütistrasse 119**
**CH-8400 Winterthur(CH)**

(74) Vertreter: **Marsch, Helmut, Dipl.-Ing. et al,**
**Lindemannstrasse 31**
**D-4000 Düsseldorf(DE)**

(54) **Wärmespeicher mit Wasser als Wärmespeichermedium und Verfahren zum Entladen des Wärmespeichers.**

(57) Durch den Phasenwechsel Eis/Wasser in dem Wärmespeicher, der vorzugsweise als Saison- oder Langzeitspeicher dient, wird die Speicherkapazität erheblich erhöht. Der nach der Eisbildung auftretende verminderte Wärmeübergang wird dadurch verbessert, dass die Eisbildung an einer Vielzahl von Wärmeübertragereinheiten (6) stattfindet, von denen jede eine Wärmeübergangslamelle (10) aufweist, die metallisch wärmeleitend mit einer Leitung (8) und einem Rohr (9) verbunden ist. Durch das Rohr (9), das ein Verdampferrohr einer Wärmepumpe ist, fliesst ein Wärme entziehendes Kältemittel, durch das die Eisbildung bewirkt wird, während durch die Leitung (8) ein Wärme zuführendes Wärmetransportmedium strömt, das ein Abtauen des Eises (14) bewirkt.

Der Betrieb erfolgt intermittierend, wobei die Wärmezufuhr vor jeder Entlade- oder Eisbildungsperiode so lange fortgesetzt wird, bis das Eis von den Wärmeübertragereinheiten (6) abgetaut und sich durch seinen Auftrieb in dem spezifisch schweren Wasser aus dem Volumenbereich der Wärmeübertragereinheiten (6) entfernt hat.

Als Wärmequelle dient, wenn immer möglich, eine Niedrigtemperatur-Wärmequelle, z.B. ein Luftkühler, ein Sonnenkollektor oder eine Abwärmequelle.

EP 0 004 552 A1

Fig.1

Fig. 2a

0004552

P. 5386/Wg/IS

BEZEICHNUNG GEÄNDERT
siehe Titelseite

Gebrüder Sulzer, Aktiengesellschaft, Winterthur/Schweiz

Wärmespeicher mit Wasser als Wärmespeichermedium

Die Erfindung betrifft einen Wärmespeicher gemäss Oberbegriff von Anspruch 1.

Bekanntlich lässt sich die nutzbare Wärmekapazität eines Wärmespeichers, in dem Wasser als Speichermedium verwendet wird, erheblich steigern, wenn auch ein Teil der latenten Wärme, die bei Phasenwechsel flüssig/fest frei bzw. bei umgekehrtem Phasenübergang gespeichert wird, genutzt wird. Schwierigkeiten ergeben sich bei Anlagen, in denen im Wärmespeicher der erwähnten Art eine Phasenumwandlung stattfindet dadurch, dass an den Wärmeübertragungsflächen des dem Speicher Wärme entziehenden Wärmeübertragers eine Eisbildung erfolgt, durch die der Wärmeübergang aus dem Speichermedium Wasser auf ein Wärmeträgermedium/ das diese Wärme — beispielsweise das Kältemittel einer Wärmepumpe —, mindestens einem Verbraucher zuführt, stark beeinträchtigt wird, so dass der Wirkungsgrad einer derartigen Anlage erheblich sinkt.

Aufgabe der Erfindung ist es, den geschilderten Nachteil derartiger, auch Eisspeicher genannter Wärmespeicher zu überwinden; gelöst wird diese Aufgabe durch die in Anspruch 1 genannten Merkmale.

Die neuartige Konstruktion des Wärmespeichers ermöglicht es, in jeder Einheit beim Wärmeentzug an der Lamellenoberfläche eine Eisschicht von einer maximal zulässigen Dicke zu bilden und nach Erreichen der Dicke durch Wärmezufuhr mit Hilfe des Wärmetransportmediums von innen her, d.h. über die Lamellen selbst,durch Abtauen von der Einheit zu lösen und durch den Auftrieb aus dem Bereich der Einheiten weg zu transportieren, ehe eine neue Eisschicht gebildet wird.
Das abgetaute Eis sammelt sich dann in dem Wasservolumen
des Speichers, das sich oberhalb des Wärmeübertragers befindet; es ist daher vorteilhaft, die Wasserhöhe
im Speichergefäss und die Lamellenhöhe der Wärmeübertrager-
Einheiten so aufeinander abzustimmen, dass auch bei hohem
Wärmeentzug ein Aufschwimmen des abgetauten Eises aus dem
Höhenbereich des Wärmeübertragers möglich ist.

Nach einem weiteren Gedanken der Erfindung betreibt man den
Speicher daher intermittierend, und zwar so, dass beim
Entladen des Speichers der Wärmeentzug mit Hilfe des verdampfenden Wärmepumpenmediums bis zur Eisbildung an den
Lamellenoberflächen durchgeführt wird, und dass durch Wärmezufuhr mit Hilfe des Wärmetransportmediums das an den
Lamellen haftende Eis von diesen gelöst wird, wobei es dank
den Auftriebskräften den Bereich des Wärmeübertragers verlässt, bevor eine zweite Entladeperiode durchgeführt wird.
Die für das Abtauen des Eises benötigte Wärme kann mit Vorteil aus einer vorhandenen Niedrigtemperatur-Wärmequelle,
z.B. einem Luftkühler und/oder einem Sonnenkollektor und/
oder einer Abwärmequelle, wie z.B. Abwasser, entnommen werden.
Dabei ist es energiewirtschaftlich besonders günstig, wenn
Entlade- und Ladeperiode des Speichers im Nacht/Tag-Rhythmus
aufeinander folgen, indem man das Entladen des Speichers mit
Hilfe einer elektromechanischen Wärmepumpe während der Nacht
durchführt, während das Lösen des Eises mit Hilfe von
Sonnenkollektoren während des Tages erfolgt.

Reichen jedoch die zur Verfügung stehenden Niedrigtemperatur-
Wärmequellen nicht aus, ein vollständiges Abtauen und Aufschwimmen des Eises vor einer nachfolgenden Entladeperiode
zu erreichen, kann das Abtauen auch durch von einem primären
Energieträger - z.B. Oel, Kohle oder Gas - gelieferte Wärme
zu Ende geführt werden, ehe - beispielsweise bei einer
im Tag/Nacht-Betrieb arbeitenden Anlage - am Abend eine neue Entladeperiode beginnt.

Der neuartige Wärmespeicher kann als Kurzzeitspeicher dienen, bei dem in dem erwähnten Nacht/Tag-Rhythmus Eis gebildet und nicht nur wieder abgetaut, sondern möglichst weitgehend auch wieder verflüssigt wird. Die Voraussetzung für diese Betriebsart ist, dass genügend billige oder Abfallenergie zur Verfügung steht. Das bevorzugte Einsatzgebiet des neuen Wärmespeichers ist jedoch die Verwendung als Langzeit- oder Saisonspeicher. Bei diesem überwiegt während der kalten Jahreszeit der Wärmeentzug, so dass ein immer grösserer Anteil seines Wasserinhalts in Eis übergeht, da erst während Zeiten, in denen mehr Wärme anfällt als verbraucht wird, wieder aufgeschmolzen wird. Als Langzeitspeicher wird der neue Wärmespeicher besonders vorteilhaft in einer "Anlage zur Bereitstellung von Heizwärme" nach der CH-PS ...... (Anmeldung Nr. 3803/78 vom 10. April 1978) angewendet.

Im folgenden wird die Erfindung anhand eines Ausführungsbeispiels im Zusammenhang mit der Zeichnung näher erläutert:

Fig. 1 zeigt schematisch einen Ausschnitt aus einem Wärmespeicher mit zwei Wärmeübertragereinheiten;

Fig. 2 gibt in drei Skizzen a bis c - ebenfalls ganz schematisch - an einer Wärmeübertragereinheit die Eisbildung, das Abtauen und das Lösen sowie den Auftrieb des Eises in dem nicht gezeigten Wasservolumen wieder.

Auf dem Boden 1 eines Speichergefässes 2, dessen Begrenzungen aus einem Aussenmantel 3, Isolationsmaterial 4 und einer wasserdichten Innenwand 5 bestehen, sind Wärmeübertragereinheiten 6 angeordnet. Jede dieser Einheiten 6 besteht aus einem Fuss 7, in den eine Leitung 8 eingelegt ist. Metallisch wärmeleitend ist mit dem Leitungsstrang 8 ein Rohrstrang 9 verbunden, an den ebenfalls in gut wärmeleitender Verbindung eine flächenhafte Wärmeübergangslamelle 10 anschliesst.

Das Rohr 9 ist ein Teil des Verdampfers einer nicht weiter dargestellten Wärmepumpe und daher von einem Kältemittel, z.B. einem Fluorkohlenwasserstoff, durchströmt. Der Leitungsstrang 8 gehört zu einem Leitungssystem für ein Wärmetransportmedium, das bei der tiefsten erreichbaren Verdampfertemperatur noch flüssig bleibt und z.B. aus mit einem Frostschutzmittel versetztem Wasser besteht.

Die Stränge 8 und 9 aller Einheiten 6 sind bezüglich der sie durchströmenden Medien parallel zueinander angeordnet und auf einer Seite an je einen nicht dargestellten Verteiler und auf der anderen Seite an je einen Sammler 11 bzw. 12 für die Medien angeschlossen.

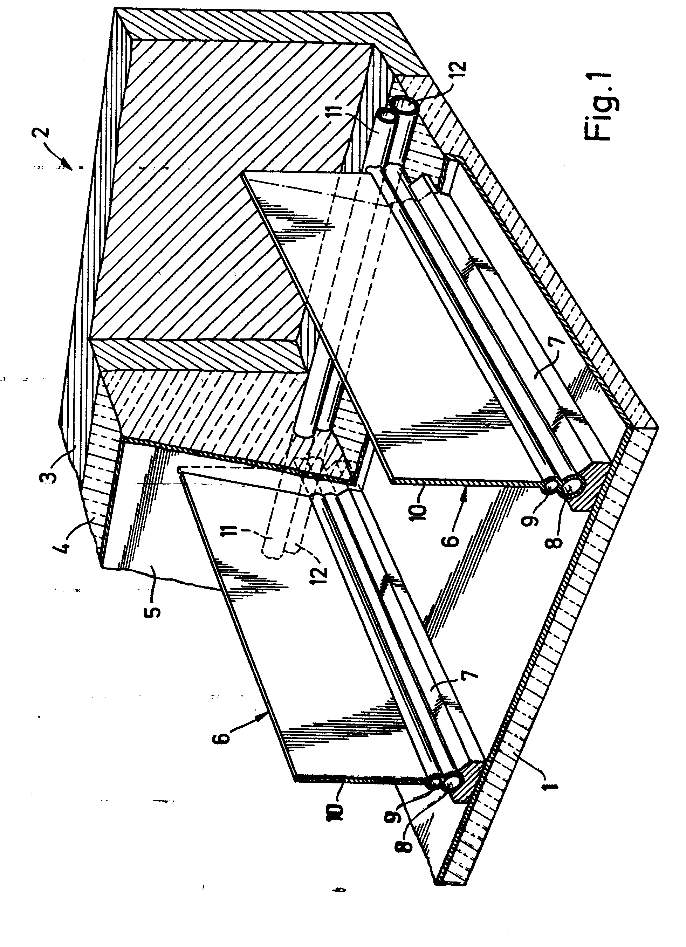

Die Sammler 11 und 12 und die Verteiler verlaufen mit Vorteil im Isolationsmaterial 4 zwischen der äusseren und inneren Seitenwand 3 bzw. 5 des Speichergefässes 2. Ein Umklammern des Eises um die Flanken der Lamellenflächen 10, das unter Umständen das Lösen des Eises von der Lamellenfläche 10 erschwert, lässt sich vermeiden, wenn die einzelnen Einheiten 6 des Wärmeübertragers mit ihren Randbereichen ebenfalls in die Seitenwände 5 des Gefässes 2 hineinragen, wie dies für die hintere Einheit in Fig. 1 angedeutet ist.

Das Speichergefäss 2 ist mit Wasser gefüllt - was in der Zeichnung nicht ausdrücklich dargestellt ist-, wobei seine Niveauoberfläche vorteilhafterweise ein Mehrfaches der Höhe der Lamellenfläche 10 beträgt.

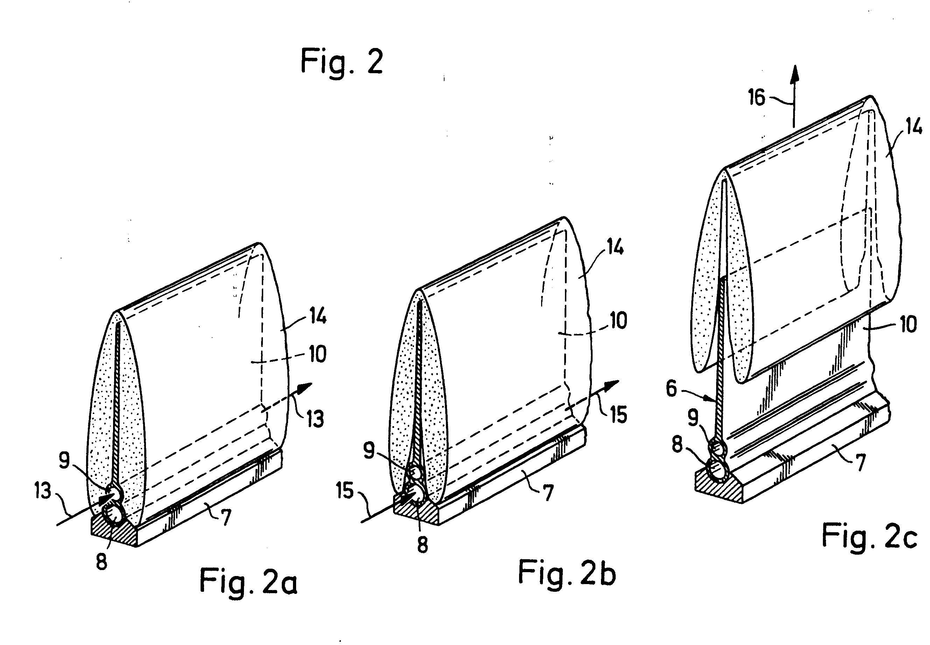

Wie bereits erwähnt, haben die vom Kältemittel durchströmten (Pfeile 13 in Fig. 2a) Verdampferrohre 9 die Aufgabe, dem Speicher 2 Wärme zu entziehen und damit die Eisbildung an den Wärmeübertragereinheiten 6 zu bewirken, wobei das die Einheit 6 umhüllende Eis 14 sich beispielsweise in der in Fig. 2a gezeigten Weise ausbildet. Das Abtauen des Eises von den Wärmeübertragereinheiten 6 wird durch das Wärme zuführende Wärmetransportmedium ausgelöst (Pfeile 15 in Fig. 2b), das zuvor in einer geeigneten Wärmequelle aufgeheizt worden ist. Dabei wird dem Wärmespeicher so lange Wärme zugeführt, bis das Eis sich von der Einheit 6 vollständig gelöst hat und infolge seines Auftriebs in dem schwereren Wasser nach oben schwimmt (Pfeile 16 in Fig. 2c). Sobald die Einheiten 6 eisfrei sind, kann ein erneuter Wärmeentzug durch das verdampfende Kältemittel in den Rohren 8 beginnen.

Besonders bei der Verwendung als Langzeitspeicher werden während der Entnahmeperiode die zugeführten Wärmemengen nicht ausreichen, um das während dieser Zeit erzeugte Eis völlig zu schmelzen. Es bildet sich daher in dieser Zeit an seiner Oberfläche ein immer mehr Eis enthaltendes Eis/Wasser-Gemisch, das erst bei Umkehr der Verhältnisse zwischen zugeführten und abgeführten Wärmemengen in der Uebergangszeit oder während des Sommers allmählich aufgelöst wird. Das Speichergefäss 2 und die Wärmeübertragereinheiten 6 werden daher in ihren Abmessungen so aufeinander abgestimmt, dass auch bei maximalem Wärmeentzug und minimalster Wärmezufuhr - der Minimalwert - der Wärmezufuhr muss nur gerade ausreichen, um das Eis von den Einheiten 6 zu lösen - ein genügend grosses Wasservolumen über den Wärmeübertragereinheiten 6 zur Aufnahme des im Wasser schwimmenden Eises zur Verfügung steht.

Auch bei einer Verwendung als Langzeitspeicher bewährt sich ein kurzperiodisch intermittierendes Entladeverfahren mit einem Nacht/Tag-Rhythmus, bei dem der Wärmeentzug über eine, mit billigem Nachtstrom betriebene, elektromechanische Wärmepumpe stattfindet, während die Wärmezufuhr während des Tages, von Sonnenkollektoren gespeist, durchgeführt wird.

## PATENTANSPRÜCHE

1. Wärmespeicher mit Wasser als Speichermedium, dessen Wärmeübertrager einerseits Leitungen (8) für ein Energie zuführendes Wärmetransportmedium und andererseits Verdampferrohre (9) einer Wärmepumpe enthält, und dessen Inhalt mindestens während eines Teils der Betriebszeit aus einem Eis/Wassergemisch besteht, dadurch gekennzeichnet, dass der Wärmeübertrager aus einzelnen Einheiten (6) besteht, die je mindestens einen Strang der Leitungen (8) und der Rohre (9) mit mindestens einer flächenhaften Wärmeübergangslamelle (10) wärmeleitend verbinden, dass ferner die Einheiten (6) mit mindestens annähernd vertikal stehenden Lamellenflächen mindestens annähernd parallel zueinander am Boden (1) des Speichergefässes (2) angeordnet und parallel an Verteiler und Sammler (12, 11) für das Wärmetransport- bzw. das Wärmepumpenmedium angeschlossen sind, und dass schliesslich das Wärmetransportmedium bis zur tiefsten im Speichergefäss (2) erreichbaren Temperatur flüssig bleibt.

2. Verfahren zum Betrieb des Wärmespeichers nach Anspruch 1, im intermittierenden Betrieb, dadurch gekennzeichnet, dass beim Entladen des Speichers der Wärmeentzug mit Hilfe des verdampfenden Wärmepumpenmediums bis zur Eisbildung an den Lamellenoberflächen durchgeführt wird, und dass durch Wärmezufuhr mit Hilfe des Wärmetransportmediums das an den Lamellen (10) haftende Eis (14) von diesen gelöst wird, wobei es dank der Auftriebskräfte den Bereich des Wärmeübertragers verlässt, bevor eine zweite Entladeperiode durchgeführt wird.

3. Verfahren nach Anspruch 2, dadurch gekennzeichnet, dass die Wärme dem Speicher von einer Niedrigtemperatur-Wärmequelle, z.B. einem Luftkühler und/oder einem Sonnenkollektor und/oder einer Abwärmequelle, zugeführt wird.

4. Verfahren nach Anspruch 3, dadurch gekennzeichnet, dass das Entladen des Speichers mit Hilfe einer elektromechanischen Wärmepumpe während der Nacht durchgeführt wird, während das Lösen des Eises (14) mit Hilfe von Sonnenkollektoren während des Tages erfolgt.

---

Die Erfindung betrifft einen Wärmespeicher gemäss Oberbegriff von Anspruch 1.

Bekanntlich lässt sich die nützbare Wärmekapazität eines Wärmespeichers, in dem Wasser als Speichermedium verwendet wird, erheblich steigern, wenn auch ein Teil der latenten Wärme, die bei Phasenwechsel flüssig/fest frei bzw. bei umgekehrtem Phasenübergang gespeichert wird, genutzt wird. Schwierigkeiten ergeben sich bei Anlagen, in denen im Wärmespeicher der erwähnten Art eine Phasenumwandlung stattfindet dadurch, dass an den Wärmeübertragungsflächen des dem Speicher Wärme entziehenden Wärmeübertragers eine Eisbildung erfolgt, durch die der Wärmeübergang aus dem Speichermedium Wasser auf ein Wärmeträgermedium – beispielsweise das Kältemittel einer Wärmepumpe –, das diese Wärme mindestens einem Verbraucher zuführt, stark beeinträchtigt wird, so dass der Wirkungsgrad einer derartigen Anlage erheblich sinkt.

Aufgabe der Erfindung ist es, den geschilderten Nachteil derartiger, auch Eisspeicher genannter Wärmespeicher zu überwinden; gelöst wird diese Aufgabe durch die in Anspruch 1 genannten Merkmale.

Die Konstruktion des Wärmespeichers ermöglicht es, in jeder Einheit beim Wärmeentzug an der Lamellenoberfläche eine Eisschicht von einer maximal zulässigen Dicke zu bilden und nach Erreichen der Dicke durch Wärmezufuhr mit Hilfe des Wärmetransportmediums von innen her, d.h. über die Lamellen selbst, durch Abtauen von der Einheit zu lösen und durch den Auftrieb aus dem Bereich der Einheiten weg zu transportieren, ehe eine neue Eisschicht gebildet wird. Das abgetaute Eis sammelt sich dann in dem Wasservolumen des Speichers, das sich oberhalb des Wärmeübertragers befindet; es ist daher vorteilhaft, die Wasserhöhe im Speichergefäss und die Lamellenhöhe der Wärmeübertrager-Einheiten so aufeinander abzustimmen, dass auch bei hohem Wärmeentzug ein Aufschwimmen des abgetauten Eises aus dem Höhenbereich des Wärmeübertragers möglich ist.

Nach einem weiteren Gedanken der Erfindung betreibt man den Speicher daher intermittierend, und zwar so, dass beim Entladen des Speichers der Wärmeentzug mit Hilfe des verdampfenden Wärmepumpenmediums bis zur Eisbildung an den Lamellenoberflächen durchgeführt wird, und dass durch Wärmezufuhr mit Hilfe des Wärmetransportmediums das an den Lamellen haftende Eis von diesen gelöst wird, wobei es dank den Auftriebskräften den Bereich des Wärmeübertragers verlässt, bevor eine zweite Entladeperiode durchgeführt wird. Die für das Abtauen des Eises benötigte Wärme kann mit Vorteil aus einer vorhandenen Niedrigtemperatur-Wärmequelle, z.B. einem Luftkühler und/oder einem Sonnenkollektor und/oder einer Abwärmequelle, wie z.B. Abwasser, entnommen werden. Dabei ist es energiewirtschaftlich besonders günstig, wenn Entlade- und Ladeperiode des Speichers im Nacht/Tag-Rhythmus aufeinander folgen, indem man das Entladen des Speichers mit Hilfe einer elektromechanischen Wärmepumpe während der Nacht durchführt, während das Lösen des Eises mit Hilfe von Sonnenkollektoren während des Tages erfolgt.

Reichen jedoch die zur Verfügung stehenden Niedrigtemperatur-Wärmequellen nicht aus, ein vollständiges Abtauen und Aufschwimmen des Eises vor einer nachfolgenden Entladeperiode zu erreichen, kann das Abtauen auch durch von einem primären Energieträger – z.B. Öl, Kohle oder Gas – gelieferte Wärme zu Ende geführt werden, ehe – beispielsweise bei einer im Tag/Nacht-Betrieb arbeitenden Anlage – am Abend eine neue Entladeperiode beginnt.

Der Wärmespeicher kann als Kurzzeitspeicher dienen, bei dem in dem erwähnten Nacht/Tag-Rhythmus Eis gebildet und nicht nur wieder abgetaut, sondern möglichst weitgehend auch wieder verflüssigt wird. Die Voraussetzung für diese Betriebsart ist, dass genügend billige oder Abfallenergie zur Verfügung steht. Das bevorzugte Einsatzgebiet des neuen Wärmespeichers ist jedoch die Verwendung als Langzeit- oder Saisonspeicher. Bei diesem überwiegt während der kalten Jahreszeit der Wärmeentzug, so dass ein immer grösserer Anteil seines Wasserinhalts in Eis übergeht, das erst während Zeiten, in denen mehr Wärme anfällt als verbraucht wird, wieder aufgeschmolzen wird. Als Langzeitspeicher wird der Wärmespeicher besonders vorteilhaft in einer Anlage zur Bereitstellung von Heizwärme angewendet.

Im folgenden wird die Erfindung anhand eines Ausführungsbeispiels im Zusammenhang mit der Zeichnung näher erläutert:

Fig. 1 zeigt schematisch einen Ausschnitt aus einem Wärmespeicher mit zwei Wärmeübertragereinheiten;

Fig. 2 gibt in drei Skizzen a bis c – ebenfalls ganz schematisch – an einer Wärmeübertragereinheit die Eisbildung, das Abtauen und das Lösen sowie den Auftrieb des Eises in dem nicht gezeigten Wasservolumen wieder.

Auf dem Boden 1 eines Speichergefässes 2, dessen Begrenzungen aus einem Aussenmantel 3, Isolationsmaterial 4 und einer wasserdichten Innenwand 5 besteht, sind Wärmeübertragereinheiten 6 angeordnet. Jeder dieser Einheiten 6 besteht aus einem Fuss 7, in den eine Leitung 8 eingelegt ist. Metallisch wärmeleitend ist mit dem Strang der Leitung 8 ein Rohrstrang eines Rohres 9 verbunden, an den ebenfalls in gut wärmeleitenden Verbindung eine flächenhafte Wärmeübergangslamelle 10 anschliesst.

Das Rohr 9 ist ein Teil des Verdampfers einer nicht weiter dargestellten Wärmepumpe und daher von einem Kältemittel,

Fig.1

# Fig. 2

Fig. 2a

Fig. 2b

Fig. 2c

0004552

2/2

Europäisches
Patentamt

**EUROPÄISCHER RECHERCHENBERICHT**

EP 79 100 603.4

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 552 459 (SCHRAMEL) <br> * Anspruch 5; Anspruch 7 und Fig. 1 * <br> -- | 1,2 | F 24 J 3/00 <br> F 25 D 21/12 |
| | DE - B - 2 445 312 (GROSS) <br> * Spalte 2, Zeilen 40 bis 43, <br> Spalte 2, Zeilen 43 bis 52 * <br> -- | 1,2 | |
| | DE - A - 2 503 303 (WEIN) <br> * Seite 2, Absatz 4, Seite 3, <br> Absatz 4 * <br> -- | 1,2 | RECHERCHIERTE SACHGEBIETE (Int. Cl.²) <br><br> F 24 D 11/00 <br> F 24 J 3/00 |
| | DE - B - 2 634 233 (CREDE) <br> * Fig., Position 9 * <br> -- | 1 | F 25 B 39/00 <br> F 25 D 21/00 |
| | DE - U - 7 708 442 (GROSS) <br> * Seite 3, Absatz 2 * <br> -- | 1 | |
| P | DE - A - 2 650 236 (CREDE) <br> * Anspruch 1 * <br> -- | 3 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur |
| A | US - A - 2 607 203 (KLEIST) <br> * Spalte 1, Zeile 53 bis Spalte 2, <br> Zeile 8 und Spalte 3, Zeile 7 bis <br> Zeile 42 * <br> -- ./.. | 1 | T: der Erfindung zugrunde liegende Theorien oder Grundsätze <br> E: kollidierende Anmeldung <br> D: in der Anmeldung angeführtes Dokument <br> L: aus andern Gründen angeführtes Dokument |

X | Der vorliegende Recherchenbericht wurde für alle Patentansprüche erstellt.

&: Mitglied der gleichen Patentfamilie, übereinstimmendes Dokument

| Recherchenort | Abschlußdatum der Recherche | Prüfer |
|---|---|---|
| Berlin | 03-07-1979 | PIEPER |

EPA form 1503.1   06.78

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| A | DE - A - 2 638 367 (MOTORHEIZUNG GMBH) <br> * ganzes Dokument * | 3 | |
| P,A | US - A - 4 114 396 (RICKERT) <br> *ganzes Dokument * | | |
| A | CH - A - 231 449 (EGLI) <br> * ganzes Dokument * | | |
| | | | RECHERCHIERTE SACHGEBIETE (Int. Cl.²) |

EPA Form 1503.2   06.78